# EUROPÄISCHE PATENTSCHRIFT

(11) **EP 0 879 331 B1**
(45) Veröffentlichungstag und Bekanntmachung des Hinweises auf die Patenterteilung: **24.10.2001**
(21) Anmeldenummer: 97914075.3
(22) Anmeldetag: 15.01.1997
(51) Int. Cl.: E04F 15/14, F24D 3/14

(54) **FUSSBODENVERBUNDKÖRPER**
COMPOSITE FLOOR STRUCTURE
STRUCTURE DE SOL COMPOSITE

(30) Priorität: 13.02.1996 DE 19605142
(43) Veröffentlichungstag der Anmeldung: 25.11.1998
(73) Patentinhaber: Schlüter-Systems KG, 58640 Iserlohn (DE)
(72) Erfinder: SCHLÜTER, Werner, D-58644 Iserlohn (DE)
(74) Vertreter: Schröter & Haverkamp
(86) Internationale Anmeldenummer: DE9700102
(87) Internationale Veröffentlichungsnummer: WO9730247

(56) Entgegenhaltungen:
- DE-B- 1 071 112
- FR-A- 583 101
- FR-A- 1 564 439
- GB-A- 386 069
- GB-A- 2 246 594
- US-A- 1 921 081
- US-A- 2 695 513
- US-A- 4 588 125

## Beschreibung

Die Erfindung betrifft Fußbodenverbundkörper mit einer mineralisch abgebundenen Mörtelschicht und einer an die Unterseite der Mörtelschicht grenzenden Trägerplatte, die im wesentlichen aus einem flachen Grundelement und von nach oben abragenden, in den Mörtel hineinreichenden Strukturelementen von im wesentlichen gleicher Höhe besteht, wobei die Mörtelüberdeckung über den abragenden Strukturelementen so dimensioniert ist, damit die durch die Strukturelemente in dem Mörtel gebildeten Negativstrukturen vordefinierte Bruchzonen zum Abbau von auftretenden Spannungen darstellen. Ferner betrifft die Erfindung eine Trägerplatte zur Ausbildung eines solchen Fußbodenverbundkörpers.

Ein solcher Fußbodenverbundkörper ist aus der FR 1 564 439 A1 bekannt. Bei diesem vorbekannten Fußbodenverbundkörper sind etwa in einem Estrich oder einer Betonplatte in größeren Abständen voneinander schachbrettartig angeordnete Schienen integriert, die an ihren Enden aneinander grenzen. Die Schienen sind auf einem Grundelement, beispielsweise einer Platte, befestigt. Durch das Einbringen dieser Leisten in eine mineralisch abgebundene Mörtelschicht als Fußboden sind in diesem Inhomogenitäten enthalten. Durch die Anordnung dieser Leisten in einer solchen Mörtelschicht ist der damit hergestellte Fußboden quasi in Felder geteilt. Treten Spannungen, etwa durch eine Schrumpfung in der Mörtelschicht auf, dann bilden sich Spannungsrisse bevorzugt an denjenigen Stellen der Mörtelschicht aus, in denen diese Leisten vorgesehen sind, und der Mörtel somit geschwächt ist. Die Längserstreckung der Leisten bedingt eine gewollte Rißbildung parallel zur vertikalen Erstreckung der eingebauten Leisten. Die durch den Spannungsabbau induzierte Rißbildung bildet an der Oberfläche der Mörtelschicht sodann die Lage der schachbrettartig eingebauten Leisten ab.

Derartige Leisten werden üblicherweise im Abstand von mehreren Metern zueinander eingebaut. Folglich tritt die gewünschte Rißbildung auch nur an diesen vorbestimmten Stellen auf. Ist jedoch die durch die Leisten gebildete Bodenfelderung zu groß gewählt, kann es vorkommen, daß ein Spannungsabbau auch zu einer durchgreifenden Beschädigung innerhalb eines solchen Bodenfeldes führt, wodurch dann eine Ausbildung von größeren, einen darüber befindlichen Fliesenbelag zerstörenden Rissen möglich ist. Ist die hergestellte Bodenplatte durch die auf diese einwirkenden Umgebungsbedingungen gewölbt, führt ein Spannungsabbau durch die eingebauten Leisten zwar zu einer Rißbildung, jedoch nehmen die an diesen Leisten erstellten Risse eine Größe ein, daß diese zu einer Zerstörung des darüber befindlichen Bodenbelages führen können. Um diesem Problem begegnen zu können, werden in den Fußbodenbelag in der Regel an gleicher Stelle Dehnungsfugen eingebaut. Diesem Problem könnte jedoch auch dadurch begegnet werden, daß die vorbekannten Leisten in einem sehr viel engeren Abstand zueinander angeordnet werden. Da diese Leisten jedoch vor dem Vergießen der Mörtelschicht aufgeständert und eingerichtet werden müssen, ist eine solche Maßnahme nicht praktikabel.

Ausgehend von diesem Stand der Technik liegt der Erfindung daher die Aufgabe zugrunde, einen gattungsgemäßen Fußbodenverbundkörper bereitzustellen, bei dem die Gefahr einer durchgreifenden Rißbildung selbst bei größeren, nicht durch Bewegungsfugen segmentierten Fußbodenbereichen vermieden wird, so daß auch Konstruktionen mit starren Bodenbelägen schadenfrei herstellbar sind.

Diese Aufgabe wird erfindungsgemäß dadurch gelöst, daß die Strukturelemente voneinander beabstandet und bezüglich des Grundelementes einem regelmäßigen Muster folgend angeordnet und an diesem angeformt sind, durch welche Strukturelemente in der Mörtelschicht perforationsähnlich wirkende Negativstrukturen gebildet sind, so daß beim Auftreten von Spannungen in der Mörtelschicht die Negativstrukturen Ausgangspunkte für sich zwischen diesen ausbreitende Trennflächenscharen sind.

Durch die Erfindung ist ein Fußbodenverbundkörper bereitgestellt, der im Gegensatz zu einer der Längserstreckung eingesetzter Strukturelemente folgenden Rißbildung einen Spannungsabbau dadurch vorsieht, daß die Trägerplatte einzelne, voneinander beabstandete und gemäß einem regelmäßigen Muster auf dem Grundelement angeordnete Strukturelemente aufweist, so daß eine Rißinduzierung zwar auch in der über einem Strukturelement befindlichen Mörtelüberdeckung stattfindet, daß diese jedoch maßgeblich durch die Anordnung der Strukturelemente und deren Beabstandung zueinander die in die Mörtelschicht eingebrachten Negativstrukturen ähnlich einer Perforation wirken, so daß zum Spannungsabbau eine Rißbildung zwischen den einzelnen Strukturelementen erfolgt. Durch diese Art des Spannungsabbaues erfolgt ein Spannungsabbau auf quasi beliebig vielen Trennflächenscharen, so daß der Versatzbetrag eines einzelnen Risses kaum erkennbar ist. Folglich treten auch in einem darüber befindlichen Fußbodenbelag keine Zerstörungen statt. Der erfindungsgemäße Fußbodenverbundkörper hat ferner den Vorteil, daß durch Vorsehen einer regelmäßigen Anordnung der Strukturelemente ein Spannungsabbau regelmäßig in der für den Spannungsabbau zweckmäßigsten Richtung erfolgt, da durch die regelmäßige Verteilung der Strukturelemente eine Vorzugsrichtung nicht gegeben ist. Auch dadurch ist vermieden, daß größere Risse in der Mörtelschicht entstehen, wenn beispielsweise eine Fußbodenwölbung in einer nicht vorgesehenen Richtung erfolgt ist.

Ferner macht die Erfindung Gebrauch von der Erkenntnis, daß es zum Herstellen einer tragfähigen Mörtelschicht nicht notwendig ist, eine Überdeckung mit einer tragfähigen Dicke vorzusehen. Vielmehr ist für die Tragfähigkeit des Estrichs auf Trennschichten unter Belastungen eine ausreichende und gleichmäßige Lastverteilung maßgebend.

Durch die geringe Dimensionierung der Mörtelüberdeckung über den nach oben abragenden Strukturelementen der Trägerplatte ist auch die Mörtelüberdeckung über verlegten Fußbodenheizungsrohren deutlich verringert. Die geringere Gesamtdicke bedingt somit auch einen niedrigeren Temperaturgradienten und somit eine bessere Ausnutzung und Regulierbarkeit der von den Fußbodenheizrohren ausgestrahlten Wärme.

Auch bezüglich seiner Herstellung weist der erfindungsgemäße Fußbodenverbundkörper gegenüber solchen aus dem vorbekannten Stand der Technik erhebliche Vorteile auf. Durch die geringere Gesamtdicke des Mörtelbettes erhärtet dieser deutlich schneller. Das Auftragen eines abschließenden Fußbodenbelages ist je nach Estrichdicke bereits nach etwa 5 Tagen möglich, da das Schwinden der Mörtelplatten durch die sich bildenden Trennflächenscharen über die Gesamtfläche gleichmäßig kompensiert wird.

Durch den vorbestimmten Spannungsabbau des Fußbodenverbundkörpers, der sich durch die vorzugsweise gleichmäßige Verteilung der Strukturelemente der Trägerplatte ebenfalls gleichmäßig über die gesamte Fußbodenfläche verteilen kann, ist es nicht mehr notwendig, größere Fußbodenflächen durch Einbringen von Bewegungs- oder Trennfugen segmentieren zu müssen.

Bei Estrichen oder Mörtelschichten im Verbund muß ein direkter Haftkontakt zum Untergrund hergestellt werden. Dieses wird erreicht durch in die Trägerplatte entsprechend eingebrachte Durchbrechungen. Im Gegensatz zu Trägerplatten aus nachgiebigem Dämmstoffmaterial, die bei Schwimmestrichen vorgesehen sind, sind Trägerplatten für Verbundestriche im allgemeinen nicht nachgiebig und bestehen daher beispielsweise aus Metallblech oder Kunststoff. Die abragenden Strukturelemente dienen dem Spannungsabbau, der durch unterschiedliches Formverhalten zwischen dem Estrich oder einer Mörtelschicht und dem Untergrund entsteht. Die Estrich- oder Mörtelschicht kann hier ansonsten relativ dünn ausgestaltet sein, da auftretende Lasten direkt in den Untergrund eingeleitet werden. Trägerplatten ohne Durchbrechungen können auch mit dem Untergrund verklebt sein, so daß eine direkte Lasteneinleitung in den Untergrund erfolgt.

Zum besseren Verständnis sei im Rahmen dieser Offenbarung unter Mörtel jedwedes breiartiges, härtendes Gemisch aus Wasser, Sand und/oder sonstigen Zuschlagstoffen, die zur Erhärtung mit einem karbonatischen oder sulfatischen Bindemittel wie etwa Zement oder Gips (wie Anhydrit, Magnesia, Zementestrich) hergestellt sind, verstanden, aus der sich Estriche ebenso wie Mörtel oder Klebemörtelschichten z. B. auch zum Verkleben von Fliesen herstellen lassen.

In einem bevorzugten Ausführungsbeispiel ist vorgesehen, daß die Strukturelemente der Trägerplatte einen kreisförmigen Querschnitt aufweisen. Durch diese Formgebung ist ausgehend von einem Strukturelement in jede Richtung gleichermaßen eine Trennflächenschar ausbildbar. In welche Richtung sich die Trennflächenschar letztendlich ausbilden wird, ist daher ausschließlich von der Anordnung der Strukturelemente zueinander abhängig.

in einer besonders vorteilhaften Ausgestaltung der Trägerplatte sind die einzelnen Strukturelemente und die diese überdeckende Mörtelschicht durch folgende Verhältnisse gekennzeichnet:
- Höhe der Strukturelemente zu Mörtelüberdeckung über der Oberkante der Strukturelemente: kleiner 1 : 1, insbesondere kleiner 1 : 1,5, wobei die maximale Mörtelüberdeckung 20 mm beträgt,
- Höhe der Strukturelemente zu kleinstem Abstand der Strukturelemente voneinander: kleiner 1 : 5, insbesondere kleiner 1 : 10, wobei dieser Abstand maximal 200 mm beträgt.

Mit diesen Strukturelemente definierenden Verhältnissen ist gewährleistet, daß die Strukturelemente so angeordnet sind, daß sich zum Spannungsabbau die Trennflächenscharen über die kürzeste Entfernung zwischen zwei Strukturelementen im Mörtelbett ausbilden und daß die durch die Strukturelemente geschaffenen Schwächebereiche so zueinander angeordnet sind, daß sich bereits bei einem einen gewissen Grad überschreitenden Spannungsaufbau die Trennflächenscharen durch perforationsähnliches Aufreißen des Mörtelbettes abbauen.

In einer zweckmäßigen Weiterbildung ist vorgesehen, daß die obere Abschlußfläche der einzelnen Strukturelemente gewölbt ausgebildet ist. Diese Maßnahme unterstützt die Trennflächenscharausbildung ausgehend von den an den First der Strukturelemente grenzenden Bereichen des Mörtels.

In einer Ausgestaltung dieser Weiterbildung sind die Aufwölbungen etwa halbkugelförmig ausgebildet, wobei die Höhe der Wölbung der vorgesehenen Estrichüberdeckung entspricht. Diese Aufwölbungen dienen somit als Lehre zum Bemessen der vorgesehenen Estrichdicke. Durch Abziehen des überschüssigen Estriches, etwa mit einer Abstreichlatte, die auf mindestens zwei derartiger Aufwölbungen ruht, ist überschüssiger Estrich abzuziehen. Dabei erscheint es ausreichend, nur eine bestimmte Anzahl von Strukturelementen mit derartigen Aufwölbungen zu versehen. Die übrigen Strukturelemente können oberseitig anders konfiguriert sein.

In einer weiteren Ausgestaltung weist die Trägerplatte zwischen den Strukturelementen liegende Durchbrechungen auf. Der Mörtel tritt beim Gießen durch diese Durchbrechungen und verklebt das Mörtelbett mit dem unter der Trägerplatte befindlichen Untergrund. Auf diese Weise läßt sich mit dem erfindungsgemäßen Fußbodenverbundkörper auch ein Verbundestrich erstellen.

In einem weiteren Ausführungsbeispiel ist vorgesehen, daß die Strukturelemente längliche Elemente mit einem langgestreckten, rechteckigen Querschnitt sind. Zweckmäßigerweise sind die Strukturelemente paarweise um 90 Grad versetzt zueinander ausgerichtet, so daß die gedachte Verlängerung eines jeden Strukturelementes in seiner Längserstreckung mit der Mitte des benachbarten, zu diesem quer angeordneten Strukturelementes fluchtet. Mit einer solchen Anordnung der Strukturelemente ist ein genau zwei Trennflächenscharen aufweisendes Trennflächengefüge in das Mörtelbett induzierbar.

In einer weiteren vorzugsweisen Ausbildung ist vorgesehen, daß die Trägerplatte viereckig, insbesondere rechteckig oder quadratisch ist, und randlich Elemente aufweist, anhand derer sich zur Bedeckung einer größeren Bodenfläche mehrere solcher Platten miteinander verbinden lassen, wobei je zwei Umfangsseiten einer Trägerplatte mit dem einen Verbindungselement und die anderen beiden Umfangsseiten mit dem anderen, komplementär ausgebildeten Verbindungselement ausgestattet sind. Die einzelnen Trägerplatten können dann in handlichen Größen hergestellt zusammengesteckt werden, um größere Fußbodenbereiche abzudecken. Eine solche Verbindung ist insbesondere auch deshalb zweckmäßig, damit die Trägerplatten beim Aufbringen eines breiförmigen Estrichs nicht verrutschen.

Ist als Bodenbelag zum Aufbringen auf den fertiggestellten Estrich ein starrer Fußbodenbelag, etwa Fliesen oder Naturstein, vorgesehen, empfiehlt es sich, diesen mittels eines weiteren Fußbodenverbundkörpers gemäß der Erfindung mit der Estrichoberseite des ersten Fußbodenverbundkörpers zu verbinden. Die Trägerplatte wirkt sodann als Entkopplungsschicht, um Längenänderungen bei einem Spannungsauf- oder -abbau in der darunterliegenden Estrichschicht zu kompensieren und somit nicht an den starren Bodenbelag weiterzuleiten. Die Dimensionierung dieser Trägerplatte ist gegenüber einer für die Estricherstellung vorgesehenen deutlich geringer ausgebildet.

Weitere Vorteile und Ausgestaltungen der Erfindung sind Bestandteil weiterer Unteransprüche sowie der nachfolgenden Beschreibung von Ausführungsbeispielen unter Bezug auf die beigefügten Figuren. Es zeigen:
- **Fig. 1**: einen Querschnitt durch einen Ausschnitt eines auf einer Unterlage angeordneten Fußbodenverbundkörpers als Unterboden,
- **Fig. 2**: eine Unteransicht des Mörtelbettes des Fußbodenverbundkörpers der Figur 1,
- **Fig. 3**: den Fußbodenverbundkörper der Figur 1 mit einem darauf aufgebrachten starren Fußbodenbelag mittels eines weiteren Fußbodenverbundkörpers,
- **Fig. 4**: eine Unteransicht eines Mörtelbettes eines Fußbodenverbundkörpers gemäß einem weiteren Ausführungsbeispiel und
- **Fig. 5**: einen Querschnitt durch zwei miteinander verbundene Trägerplatten, deren Strukturelemente domartige Aufwölbungen zum Bemessen der notwendigen Estrichdicke aufweisen.

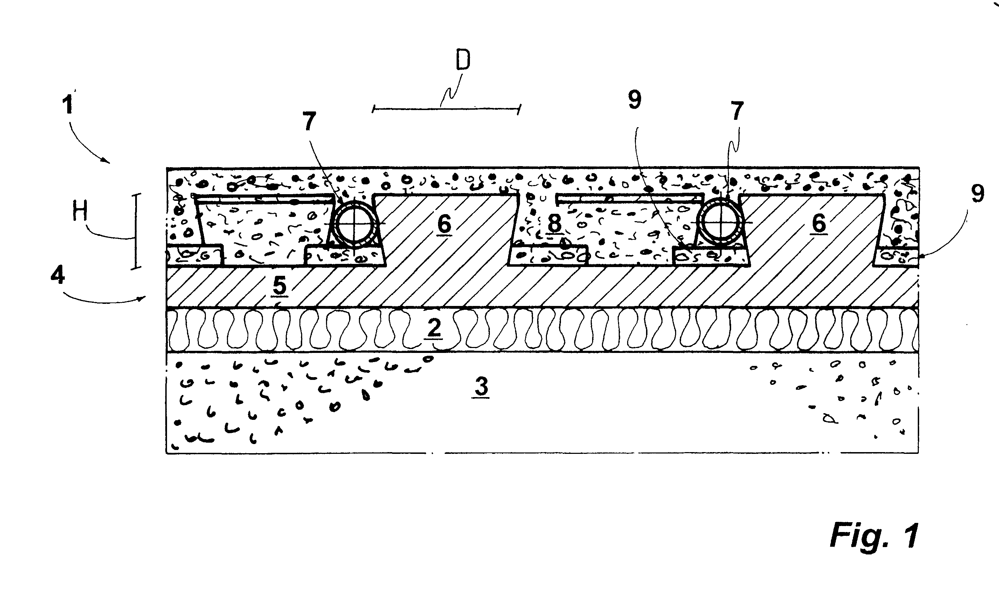

Figur 1 zeigt einen Fußbodenverbundkörper 1, der über einer Dämmstoffplatte 2 zur Trittschalldämmung auf einem Betonfundament 3 angeordnet ist.

Der Fußbodenverbundkörper 1 weist eine Trägerplatte 4 auf, die im wesentlichen aus einer Grundplatte 5 und einer Vielzahl von nach oben abragenden Strukturelementen 6 besteht. Die Strukturelemente 6 weisen eine kreisförmige Querschnittsfläche auf und sind in regelmäßigen Abständen auf der Grundplatte 5 angeordnet. Die Trägerplatte 4 zeigt eine versetzte Anordnung seiner Strukturelemente 6 auf der Grundplatte 5.

In dem in Figur 1 dargestellten Ausführungsbeispiel sind zwischen den Strukturelementen 6 Kunststoffrohre 7 als Fußbodenheizung eingebracht. Diese Anordnung aus Trägerplatte 4 und darin verklemmt gehaltenen Kunststoffrohren 7 ist mit Estrich 8 bis zu einer vorbestimmten Überdeckungshöhe vergossen worden. Der Estrich 8 weist eine herkömmliche Zusammensetzung aus Wasser und Sand mit weiteren Zuschlagstoffen auf, die mit Zement als Bindemittel vermengt sind.

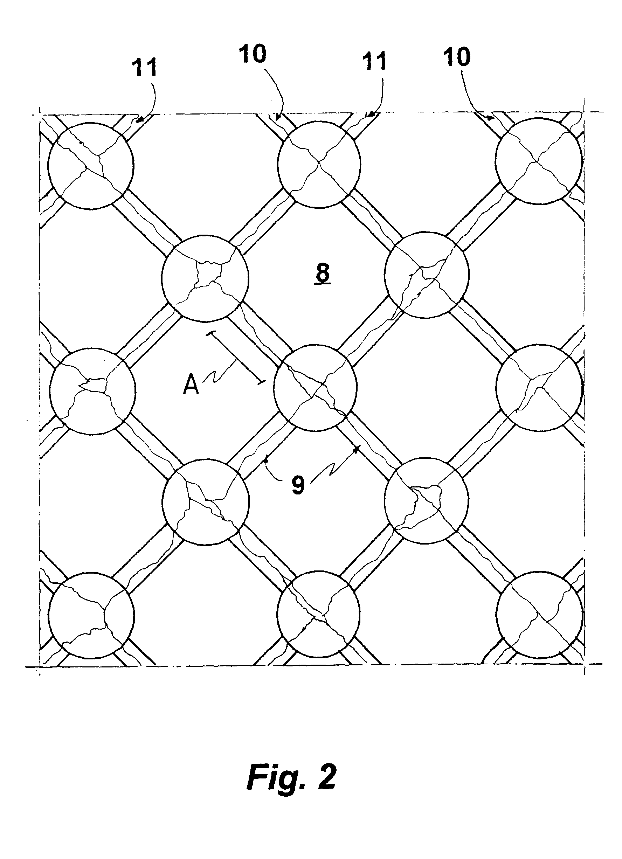

Die Höhe H der Strukturelemente 6 beträgt in dem dargestellten Ausführungsbeispiel 30 mm. Der Durchmesser D der Strukturelemente 6 beträgt 60 mm, woraus sich ein Verhältnis von H : D von 1 : 2 ergibt. Der aus Figur 2 ersichtliche kürzeste Abstand A zwischen zwei Strukturelementen 6 beträgt 45 mm, woraus sich ein Verhältnis von H : A von 1 : 1,5 ergibt. Die Überdeckung Ü der Estrichschicht 8 über einem Strukturelement 6 beträgt 10 mm, woraus sich ein Verhältnis von H : Ü von 1 : 0,33 ergibt. Die Gesamtdicke des Estrichs beträgt demnach H + Ü, was in dem dargestellten Ausführungsbeispiel 40 mm entspricht.

Zur Verbesserung einer Verklammerung des Estrichs 8 mit den Strukturelementen 6 sind die Strukturelemente in einer Draufsicht auf die Trägerplatte 4 geringfügig hinterschnitten ausgebildet. Die dargestellten Strukturelemente 6 verjüngen sich zur Grundplatte 5 hin kegelförmig.

Bauen sich in dem Estrich 8 Spannungen auf, beispielsweise durch Ausbildung eines Temperaturgradienten, etwa durch Inbetriebnahme der Fußbodenheizung, vermag der Estrich 8 diese bis zu einem gewissen geringen Verformungsgrad bruchfrei aufzunehmen. Wird jedoch diese bestimmte Spannungsaufnahmegrenze überschritten, wirken sich die durch die Strukturelemente 6 im Estrich 8 gebildeten Negativstrukturen als Schwächebereiche zur Ausbildung von Bruchzonen zum Spannungsabbau aus. Durch die regelmäßige Anordnung der Strukturelemente 6 auf der Grundplatte 5 entstehen zum Spannungsabbau dann Trennflächenscharen, die sich vorzugsweise entlang des kürzesten Abstandes A zwischen zwei Strukturelementen 6 ausbilden. Die einzelnen, durch die Strukturelemente 6 erzeugten Schwächepunkte sind sodann durch die Trennflächen miteinander verbunden. Der Spannungsabbau erfolgt somit perforationsähnlich entlang einer Vielzahl etwa parallel angeordneter Trennflächen. Jede einzelne Trennfläche kompensiert daher nur einen Bruchteil der Gesamtspannung, so daß sich jede Trennfläche lediglich als Haarriß darstellt.

Die Ausbildung dieser, durch die Strukturelemente 6 gebildeten Schwächebereiche verbindenden Trennflächen wird durch Vorsehen von die Strukturelemente 6 miteinander verbindenden Stegen 9, die entlang der vorgesehenen Trennflächenausbildung an der Grundplatte 5 angeordnet sind, begünstigt.

Zwei solcher Trennflächenscharen 10, 11 sind aus Figur 2 ersichtlich, in der der Estrich 8 in einer Unteransicht ohne Trägerplatte 4 abgebildet ist. Es wird deutlich, daß die beiden Trennflächenscharen 10, 11 sich entlang der kürzesten Abstände A zwischen zwei durch die Strukturelemente 6 gebildeten Schwächebereiche im Bereich der durch die Stege 9 vorgegebenen Bahnen ausbilden.

Die hervorragenden Eigenschaften des Fußbodenverbundkörpers 1 wurden ebenfalls in einer Untersuchungsreihe bestätigt.

Der Fußbodenverbundkörper gemäß der Erfindung ist diesen Untersuchungen zufolge trotz geringerer Gesamtestrichdicke, z.B. mit einem Mehrfachen der vorgeschriebenen Lastaufnahmefähigkeit von 1,5 kN/m² für normale Verkehrslasten wie Wohnungsbau belastbar. Im Gegensatz zu den bekannten Fußbodenverbundkörpern weist der Fußbodenverbundkörper gemäß der Erfindung jedoch bezüglich seiner Verwölbungseigenschaft erheblich bessere Ergebnisse auf, insbesondere ist eine Belagzerstörende Rißbildung vermieden.

In weiteren Ausgestaltungen ist vorgesehen, daß die Strukturelemente eine rißbegünstigende, mehreckige oder stemförmige Querschnittsform aufweisen. Vorzugsweise sind diese Strukturelemente so angeordnet, daß der kürzeste Abstand zwischen zwei Strukturelementen sich zwischen zwei Kanten der Strukturelemente erstreckt. Diese Kanten wirken sich in Bezug auf eine richtungsinduzierte Rißbildung günstig aus.

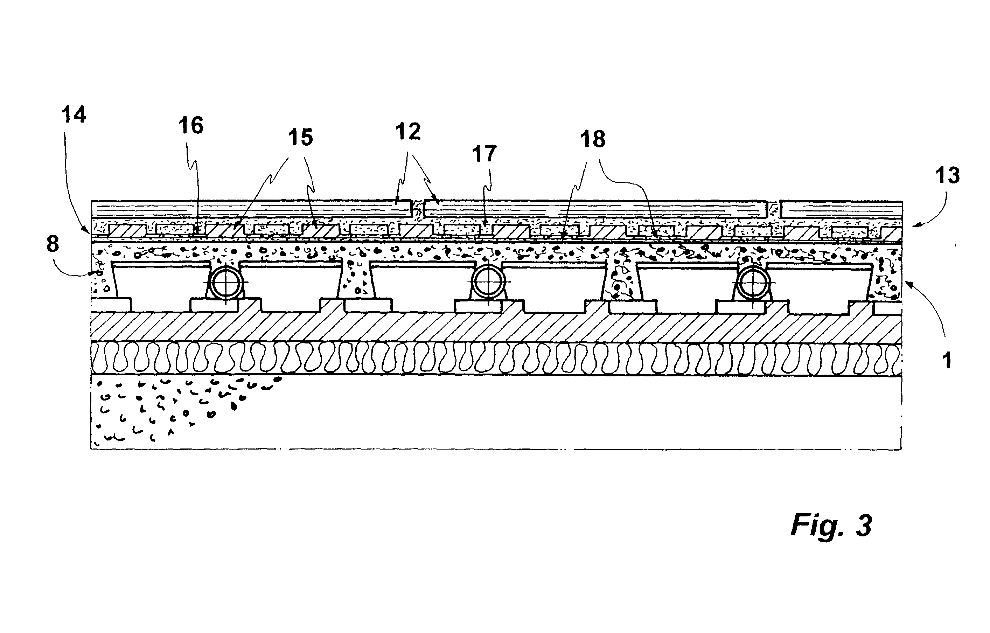

Figur 3 zeigt einen mit Fliesen 12 belegten Fußbodenverbundkörper 1. Der Fliesenbelag 12 ist mittels eines gleichartigen Fußbodenverbundkörpers 13 mit der Oberfläche des Estrichs 8 verklebt. Die zu diesem Zweck verwendete Trägerplatte 14 ist bezüglich ihrer Strukturelemente 15 entsprechend der Trägerplatte 4 ausgebildet, wobei jedoch die absolute Dimensionierung deutlich geringer ist. Die Trägerplatte 14 ist eine tiefgezogene Kunststoffolie. Die über der Grundplatte 16 gemessene Höhe eines Strukturelementes 15 in dem in Figur 3 gezeigten Ausführungsbeispiel beträgt nur etwa 4 mm. Die Trägerplatte 14 ist unterseitig ebenfalls mit Mörtel 17 mit der Oberseite des Estrichs 8 verklebt, wobei die Trägerplatte 14 Durchbrechungen 18 zum Durchtritt von Mörtel 17 aufweist. Die Trägerplatte 14 dient als Entkopplungsschicht, damit mögliche Verformungen des Fußbodenverbundkörpers 1, insbesondere seines Estrichs 8, nicht an den Fliesenbelag 12 weitergegeben werden. Die Fliesenbelagsschicht haftet vollflächig an der aus Klebemörtel bestehenden Schicht und bildet so die kraftdominierende Komponente, so daß Längenänderungen und Risse nicht auf die Belagsschicht übertragen werden. Wie bereits oben aufgezeigt, spielen sich die Bewegungen des Estrichs 8 zum Spannungsabbau nur in der Größenordnung von Haarrissen ab, so daß derartige Bewegungen ohne weiteres durch die Trägerplatte 14 absorbiert werden können. Bei größeren Bewegungen zerbricht die Mörtelschicht 17 durch Ausbildung von Trennflächenscharen entsprechend der oben beschriebenen Estrichschicht 8, die starre Belagsschicht bleibt jedoch unbeschadet.

In einem weiteren, nicht dargestellten Ausführungsbeispiel ist vorgesehen, daß eine der Trägerplatte 14 entsprechende Trägerplatte Öffnungen in den zylindrischen Abschnitten seiner Strukturelemente aufweist. Dadurch werden zusätzlich oder anstelle der Durchbrechungen 18 Öffnungen geschaffen, so daß sich eine wabenähnliche Struktur ergibt, durch die Mörtel in den unter der Trägerplatte befindlichen Bereich eindringen kann.

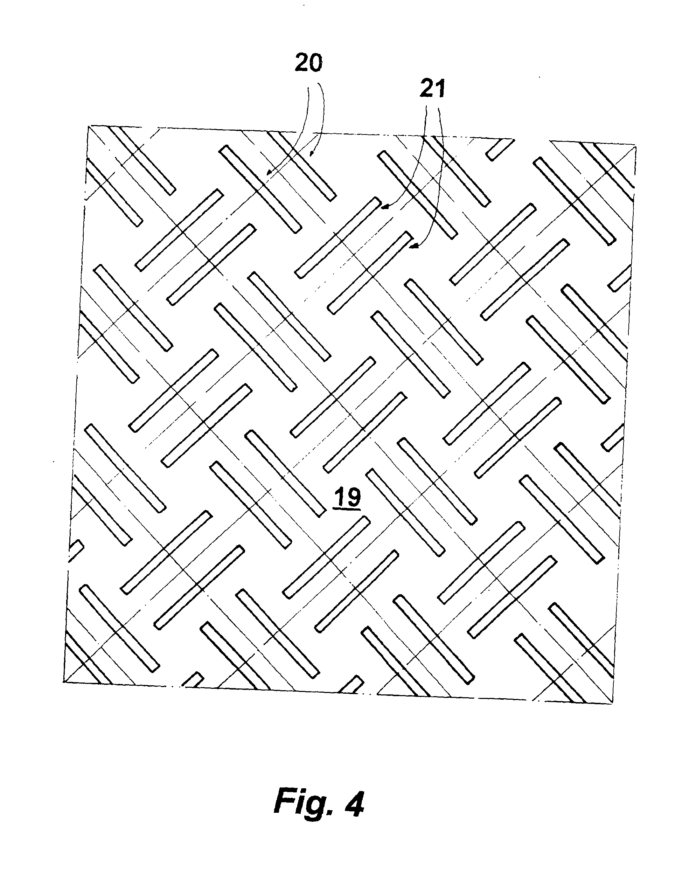

Figur 4 zeigt eine Unteransicht eines Estrichs 18 eines weiteren Ausführungsbeispiels. Die als Schwächebereiche 20, 21 durch entsprechende, in Figur 4 nicht dargestellte Strukturelemente eingebrachten potentiellen Bruchzonen sind im Gegensatz zu dem in den Figuren 1 bis 3 darstellten Ausführungsbeispiel nicht punkt- sondern linienförmig ausgebildet. Mit einer solchen Ausbildung lassen sich zwei Trennflächenscharen ausbilden, deren Längserstreckung der Längserstreckung der Schwächebereiche 20, 21 entspricht Die Ausgestaltung eines derartigen Estrichs 19 ist zweckmäßig, wenn zur Erstellung eines Verbundestrichs anstelle der aus Dämmstoffmaterial hergestellten Trägerplatte 4 ein Blech verwendet wird. Zum Erzeugen der Strukturen 20, 21 sind dem Blech ausgestanzte und aufgebogene Strukturelemente zugeordnet. Dadurch entstehen zwischen den Strukturelementen Durchbrechungen, durch die der Estrich 19 zum Verkleben mit dem Untergrund durchtreten kann.

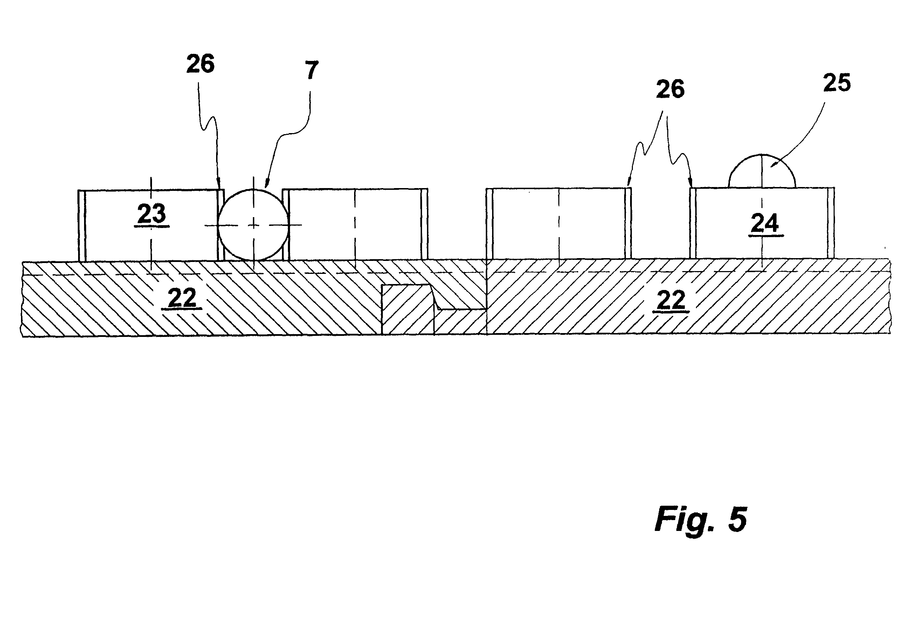

Bei dem in Figur 5 dargestellten Ausführungsbeispiel sind den ausschnittsweise wiedergegebenen Trägerplatten 22 zwei unterschiedliche Strukturelemente 23, 24 zugeordnet. Die Strukturelemente 23, 24 weisen an ihrer Oberseite eine halbkugelförmige Aufwölbung 25 auf. Die Höhe der Aufwölbung 25 ist so bemessen, daß diese der vorgesehenen Estrichdicke entspricht, so daß diese als Lehre zum Bemessen der Estrichdicke verwendbar ist. Eine auf mehreren dieser Aufwölbungen 25 ruhende Abstreiflatte kann dann über den gegossenen Estrich gezogen werden, um überschüssigen Estrich abzuziehen. Auf diese Weise ist gewährleistet, daß zum einen die Estrichüberdeckung über den Trägerplatten 22 eine gleichbleibende Dicke aufweist und daß zum anderen eine optimale Estrichüberdeckung über den Strukturelementen 23, 24 erzielt wird.

Die Strukturelemente 23, 24 weisen ferner umfänglich angeordnete Klemmlippen 26 auf, die zwischen den Strukturelementen 23, 24 eingesetzte Kunststoffrohre 7 für eine Fußbodenheizung in ihrer gewünschten Position fixieren.

In einer weiteren, nicht dargestellten Ausgestaltung ist vorgesehen, daß in die Trägerplatten unterseitig Drainagekanäle eingebracht sind. Die Drainagekanäle sind zweckmäßigerweise zwei sich kreuzende Kanalscharen. Die Drainagekanäle sind mit der Oberseite der Trägerplatte durch Durchbrechungen verbunden, die so dimensioniert sind, daß ein Verstopfen derselben durch Mörtel oder Estrich vermieden ist. Mit Hilfe einer solchen Trägerplatte ist es dann möglich einen erfindungsgemäßen Fußbodenverbundkörper herzustellen, der unterseitig auf einer Abdichtungsschicht, etwa einer Bitumenschicht, angeordnet und somit drainiert ist. Beim Auflegen der Trägerplatte auf die Dichtungsschicht verbleiben die Drainagekanäle ungefüllt und dienen somit als Wegsamkeit zum Abführen von Sickerwässern.

### Zusammenstellung der Bezugszeichen

- 1: Fußbodenverbundkörper
- 2: Dämmstoffplatte
- 3: Betonfundament
- 4: Trägerplatte
- 5: Grundplatte
- 6: Strukturelement
- 7: Kunststoffrohr
- 8: Estrich
- 9: Steg
- 10: Trennflächenschar
- 11: Trennflächenschar
- 12: Fliesen
- 13: Fußbodenverbundkörper
- 14: Trägerplatte
- 15: Strukturelement
- 16: Grundplatte
- 17: Mörtel
- 18: Durchbrechung
- 19: Estrich
- 20: Schwächebereich
- 21: Schwächebereich
- 22: Trägerplatte
- 23: Strukturelement
- 24: Strukturelement
- 25: Aufwölbung
- 26: Klemmlippe

- H: Höhe eines Strukturelementes
- D: Durchmesser eines Strukturelementes
- Ü: Mörtelüberdeckung im Bereich eines Strukturelementes

## Patentansprüche

1. Fußbodenverbundkörper mit einer mineralisch abgebundenen Mörtelschicht (8, 17, 19) und einer an die Unterseite der Mörtelschicht (8, 17, 19) grenzenden Trägerplatte (4, 14, 22), die im wesentlichen aus einem flachen Grundelement (5, 16) und von nach oben abragenden, in den Mörtel (8, 17, 19) hineinreichenden Strukturelementen (6, 15, 23, 24) von im wesentlichen gleicher Höhe besteht, wobei die Mörtelüberdeckung (Ü) über den abragenden Strukturelementen (6, 15, 23, 24) so dimensioniert ist, damit die durch die Strukturelemente (6, 15, 23, 24) in dem Mörtel (8, 17, 19) gebildeten Negativstrukturen vordefinierte Bruchzonen (20, 21) zum Abbau von auftretenden Spannungen darstellen, **dadurch gekennzeichnet, daß** die Strukturelemente (6, 15, 23, 24) voneinander beabstandet und bezüglich des Grundelementes (5, 16) einem regelmäßigen Muster folgend angeordnet und an diesem angeformt sind, durch welche Strukturelemente (6, 15, 23, 24) in der Mörtelschicht (8, 12, 19) perforationsähnlich wirkende Negativstrukturen gebildet sind, so daß beim Auftreten von Spannungen in der Mörtelschicht (8, 17, 19) die Negativstrukturen Ausgangspunkte für sich zwischen diesen ausbreitende Trennflächenscharen (10, 11, 20, 21) sind.

2. Verbundkörper nach Anspruch 1, **dadurch gekennzeichnet, daß** die Strukturelemente (6, 15) der Trägerplatte (4, 14) in parallel zur flächigen Erstreckung des Grundelements (5, 16) angeordneten Schnittebenen einen kreisförmigen Querschnitt aufweisen.

3. Verbundkörper nach Anspruch 1, **dadurch gekennzeichnet, daß** die Strukturelemente der Trägerplatte (22) in parallel zur flächigen Erstreckung des Grundelements (5, 16) angeordneten Schnittebenen einen mehreckigen oder sternförmigen Querschnitt aufweisen.

4. Verbundkörper nach Anspruch 1, 2 oder 3, **gekennzeichnet durch** folgende Verhältnisse zur Anordnung der Strukturelemente (6, 15, 23, 24):
- Höhe (H) der Strukturelemente (6, 15, 23, 24) zu Mörtelüberdeckung (Ü) über der Oberkante der Strukturelemente (6, 15, 23, 24): kleiner 1 : 1, insbesondere kleiner 1 : 1,5, wobei die maximale Mörtelüberdeckung 20 mm beträgt,
- Höhe (H) der Strukturelemente (6, 15, 23, 24) zu kleinstem Abstand (A) der Strukturelemente (6, 15, 23, 24) voneinander: kleiner 1 : 5, insbesondere kleiner 1 : 10, wobei dieser Abstand maximal 200 mm beträgt.

5. Verbundkörper nach einem der Ansprüche 2 bis 4, **dadurch gekennzeichnet, daß** die obere Abschlußfläche der Strukturelemente (24) gewölbt ist.

6. Verbundkörper nach Anspruch 1, **dadurch gekennzeichnet, daß** die Strukturelemente längliche Elemente mit einem langgestreckten, rechteckigen Querschnitt sind.

7. Verbundkörper nach Anspruch 6, **dadurch gekennzeichnet, daß** die Ausrichtung der Strukturelemente paarweise um 90° versetzt zueinander angeordnet ist, so daß die gedachte Verlängerung eines Strukturelementes in seiner Längserstreckung mit der Mitte des benachbarten, zu diesem quer angeordneten Strukturelement fluchtet.

8. Verbundkörper nach einem oder mehreren der Ansprüche 1 bis 7, **dadurch gekennzeichnet, daß** das Grundelement (5, 16) der Trägerplatte (4,14) Durchbrechungen (18) aufweist.

9. Verbundkörper nach einem oder mehreren der Ansprüche 1 bis 8, **dadurch gekennzeichnet, daß** die Trägerplatte (4) aus einem Dämmaterial besteht.

10. Verbundkörper nach einem oder mehreren der Ansprüche 1 bis 8, **dadurch gekennzeichnet, daß** die Trägerplatte aus einem Metallblech gefertigt ist, wobei die Strukturelemente herausgebogene Abschnitte des Metallbleches sind.

11. Verbundkörper nach einem oder mehreren der Ansprüche 1 bis 8, **dadurch gekennzeichnet, daß** die Trägerplatte (14) eine tiefgezogene Kunststoffolie ist.

12. Verbundkörper nach Anspruch 11, **dadurch gekennzeichnet, daß** die Strukturelemente (15) der geprägten Kunststoffolie (14) Öffnungen zum Durchtritt von Mörtel aufweisen.

13. Verbundkörper nach einem oder mehreren der Ansprüche 1 bis 12, **dadurch gekennzeichnet, daß** die Trägerplatte (4, 14) viereckig, insbesondere quadratisch ist, und randliche Elemente aufweist, anhand derer zur Bedeckung einer größeren Bodenfläche mehrere solcher Platten miteinander verbindbar sind, wobei je zwei Umfangsseiten einer Trägerplatte (4, 14, 23, 24) mit dem einen Verbindungselement und die anderen beiden Umfangsseiten mit dem anderen, komplementär ausgebildeten Verbindungselement ausgestattet sind.

14. Verbundkörper nach einem oder mehreren der Ansprüche 1 bis 13, **dadurch gekennzeichnet, daß** auf der Oberseite der Mörtelschicht (8) zum Aufbringen eines starren Fußbodenbelages (12) ein weiterer Fußbodenverbundkörper (13) angebunden ist, wobei auf der Oberseite der auf der Trägerplatte (14) angeordneten Mörtelschicht (17) der starre Fußbodenbelag (12) vorgesehen ist.

15. Verbundkörper nach einem oder mehreren der Ansprüche 1 bis 14, **dadurch gekennzeichnet, daß** eine bestimmte Anzahl von Strukturelementen (24) oberseitig ein nach oben abragendes Element (25) aufweisen, dessen Höhe der Dicke der vorgesehenen Estrichüberdeckung entspricht.

16. Verbundkörper nach Anspruch 15, **dadurch gekennzeichnet, daß** das Element eine halbkugelförmige Aufwölbung (25) ist.

17. Trägerplatte zur Ausbildung eines Fußbodenverbundkörpers nach Anspruch 15, **dadurch gekennzeichnet, daß** die Trägerplatte (22) aus einem im wesentlichen flachen Grundelement besteht, auf dem nach oben abragende Strukturelemente (23, 24) von im wesentlichen gleicher Höhe angeordnet sind, wobei die Strukturelemente (23, 24) voneinander beabstandet und bezüglich des flachen Grundelementes (22) einem regelmäßigen Muster folgend angeordnet und an dem Grundelement (22) angeformt sind, von welchen Strukturelementen (23, 24) eine bestimmte Anzahl oberseitig ein nach oben abragendes Element (25) aufweisen.

18. Trägerplatte nach Anspruch 17, **dadurch gekennzeichnet, daß** als nach oben abragendes Element der bestimmten Strukturelemente (24) jeweils eine halbkugelförmige Aufwölbung (25) vorgesehen ist.

## Claims

1. Composite floor structure, having a minerally bonded layer (8, 17, 19) and a carrier plate (4, 14, 22), which abuts against the underside of the bonded layer (8, 17, 19) and substantially comprises a flat base member (5, 16) and upwardly protruding structural members (6, 15, 23, 24) of substantially identical height, which extend into the bonded layer (8, 17, 19), the bonded layer coating (Ü) over the protruding structural members (6, 15, 23, 24) being dimensioned in such a manner that the negative structures, formed in the bonded layer (8, 17, 19) by the structural members (6, 15, 23, 24), represent previously defined fracture zones (20, 21) for the reduction of any stresses which may occur, **characterised in that** the structural members (6, 15, 23, 24) are disposed so as to be spaced apart from one another and so as to follow a regular pattern with respect to the base member (5, 16) and are shaped to fit said pattern, active negative structures being formed in a perforationlike manner by said structural members (6, 15, 23, 24) in the bonded layer (8, 17, 19) so that, in the event of stresses occurring in the bonded layer (8, 17, 19), the negative structures are starting points for groups of parting surfaces (10, 11, 20, 21), which extend therebetween.

2. Composite structure according to claim 1, **characterised in that** the structural members (6, 15) of the carrier plate (4, 14) have a circular cross-section in sectional planes disposed parallel to the planar extension of the base member (5, 16).

3. Composite Structure according to claim 1, **characterised in that** the structural members of the carrier plate (22) have a polygonal or radial cross-section in sectional planes disposed parallel to the planar extension of the base member (5, 16).

4. Composite structure according to claim 1, 2 or 3, **characterised by** the following ratios for the disposition of the structural members (6, 15, 23, 24):
- height (H) of the structural members (6, 15, 23, 24) relative to bonded layer coating (Ü) above the upper edge of the structural members (6, 15, 23, 24): less than 1 : 1, more especially less than 1 : 1.5, the maximum bonded layer coating being 20 mm,
- height (H) of the structural members (6, 15, 23, 24) relative to shortest spacing (A) between the structural members (6, 15, 23, 24): less than 1 : 5, more especially less than 1 : 10, this spacing being a maximum of 200 mm.

5. Composite structure according to one of claims 2 to 4, **characterised in that** the upper end face of the structural members (24) is curved.

6. Composite structure according to claim 1, **characterised in that** the structural members are elongate elements having an extended rectangular cross-section.

7. Composite structure according to claim 6, **characterised in that** the alignment of the structural members is such that they are offset by 90° from one another in pairs, so that the imaginary extension of a structural member is in alignment with the centre of the adjacent structural member, which is disposed transversely relative to the latter member, when viewed with respect to its longitudinal extension.

8. Composite structure according to one or more of claims 1 to 7, **characterised in that** the base member (5, 16) of the carrier plate (4, 14) has openings (18).

9. Composite structure according to one or more of claims 1 to 8, **characterised in that** the carrier plate (4) is formed from an insulating material.

10. Composite structure according to one or more of claims 1 to 8, **characterised in that** the carrier plate is produced from a metal sheet, the structural members being bent-out portions of the metal sheet.

11. Composite structure according to one or more of claims 1 to 8, **characterised in that** the carrier plate (14) is a deep-drawn plastics material film.

12. Composite structure according to claim 11, **characterised in that** the structural members (15) of the stamped plastics material film (14) have openings for bonded layer to pass therethrough.

13. Composite structure according to one or more of claims 1 to 12, **characterised in that** the carrier plate (4, 14) is quadrangular, more especially square, and has peripheral elements, whereby a plurality of such plates are interconnectable in order to cover a relatively large floor area, every two peripheral sides of a carrier plate (4, 14, 23, 24) being provided with one connecting member, and the other two peripheral sides being provided with the other connecting member which has a complementary configuration.

14. Composite structure according to one or more of claims 1 to 13, **characterised in that** an additional composite floor structure (13) is attached to the upper side of the bonded layer (8) for the application of a rigid floor covering (12), the rigid floor covering (12) being provided on the upper side of the bonded layer (17) disposed on the carrier plate (14).

15. Composite structure according to one or more of claims 1 to 14, **characterised in that** a specific number of structural members (24) have an upwardly protruding element (25) on their upper sides, the height of which element corresponds to the thickness of the intended coating of the floor finishing surface.

16. Composite structure according to claim 15, **characterised in that** the element is a hemispherical curve (25).

17. Carrier plate for providing a composite floor structure according to claim 15, **characterised in that** the carrier plate (22) comprises a substantially flat base member, on which there are disposed upwardly protruding structural members (23, 24) of substantially identical height, the structural members (23, 24) being disposed so as to be spaced apart from one another and so as to follow a regular pattern with respect to the flat base member (22) and being fitted on the base member (22), a specific number of which structural members (23, 24) have an upwardly protruding element (25) on their upper sides.

18. Carrier plate according to claim 17, **characterised in that** a hemispherical curve (25) is provided as the upwardly protruding element of each of the specific structural members (24).

## Revendications

1. Structure de sol composite avec une couche de mortier (8, 17, 19) liée minéralement et, au contact de la face inférieure de la couche de mortier (8, 17, 19), une plaque porteuse (4, 14, 22) qui est essentiellement constituée d'un élément de base plane (5, 16) et d'éléments structurels (6, 15, 23, 24) de hauteur identique en saillie dans le mortier (8, 17, 19), sachant que l'épaisseur du mortier (R) qui recouvre les éléments structurels (6, 15, 23, 24) en saillie est calculée de telle sorte que les structures négatives formées par les éléments structurels (6, 15, 23, 24) dans le mortier (8, 17, 19) constituent des zones de ruptures (20, 21) prédéfinies destinées à absorber les contraintes, **caractérisée en ce que** les éléments structurels (6, 15, 23, 24) soient espacés les uns des autres, de manière à ce qu'ils forment un motif régulier sur l'élément de base (5, 16) sur lequel ils sont moulés ; les éléments structurels (6, 15, 23, 24) forment des structures négatives dont l'effet sera similaire à une perforation de la couche de mortier (8, 12, 19), de sorte qu'en présence de contraintes dans la couche de mortier (8, 17, 19), ces structures négatives initient la formation d'un système de surfaces de séparation (10, 11, 20, 21) qui s'étend entre elles.

2. Structure composite selon la revendication 1, **caractérisée en ce que** les éléments structurels (6, 15) de la plaque porteuse (4, 14) présentent une section circulaire sur des surfaces de coupes parallèles à l'extension plane de la plaque de base (5, 16).

3. Structure composite selon la revendication 1 **caractérisée en ce que** les éléments structurels de la plaque porteuse (22) présentent sur des surfaces de coupe disposées parallèlement à l'extension plane de l'élément de base (5, 16), une section polygonale ou en forme d'étoile.

4. Structure composite selon la revendication 1, 2, ou 3, **caractérisée par** les proportions suivantes de disposition des éléments structurels (6, 15, 23, 24):
Hauteur (H) des éléments structurels (6, 15, 23, 24) par rapport à la couche de mortier (R) au-dessus de l'arête supérieure des éléments structurels (6, 15, 23, 24) : inférieur à 1 : 1, notamment inférieur à 1 : 1,5, sachant que l'épaisseur maximale de la couche de mortier s'élève à 20 mm.
Hauteur (H) des éléments structurels (6, 15, 23, 24) par rapport au plus petit intervalle (A) des éléments structurels (6, 15, 23, 24) entre eux : inférieur à 1 : 5, notamment inférieur à 1 : 10, sachant que cet intervalle s'élève au maximum à 200 mm.

5. Structure composite selon l'une des revendications 2 à 4, **caractérisée en ce que** la surface supérieure de finition des éléments structurels (24) soit bombée.

6. Structure composite selon la revendication 1, **caractérisée en ce que** les éléments structurels sont des éléments de section carrée qui s'étendent en longueur.

7. Structure composite selon la revendication 6 **caractérisée en ce que** les éléments structurels soient de préférence disposés deux par deux, perpendiculairement les uns par rapport aux autres, de sorte que le prolongement imaginaire de l'orientation longitudinale de chaque élément structurel soit aligné avec le milieu de l'élément structurel voisin disposé perpendiculairement.

8. Structure composite, selon une ou plusieurs des revendications 1 à 7 **caractérisée en ce que** l'élément de base (5, 16) de la plaque porteuse (4, 14) présente des découpures (18)

9. Structure composite selon une ou plusieurs des revendications 1 à 8, **caractérisée en ce que** la plaque porteuse (4) soit constituée d'un matériau isolant.

10. Structure composite selon une ou plusieurs des revendications 1 à 8, **caractérisée en ce que** la plaque porteuse soit fabriquée dans une tôle métallique, les éléments structurels étant constitués de découpes repliées faites dans la tôle métallique.

11. Structure composite selon une ou plusieurs des revendications 1 à 8, **caractérisée en ce que** la plaque porteuse (14) soit une pellicule plastique thermoformée.

12. Structure composite selon la revendication 11, **caractérisée en ce que** les éléments structurels (15) de la pellicule plastique gaufrée (14) présente des ouvertures pour laisser pénétrer le mortier.

13. Structure composite selon une ou plusieurs des revendications 1 à 12, **caractérisée en ce que** la plaque porteuse (4, 14) soit carrée, notamment rectangulaire et présente des éléments de bordure permettant la jonction de plusieurs plaques utilisées pour recouvrir une grande surface au sol, sachant que deux côtés périphériques de la plaque porteuse (4, 14, 23, 24) seront munis d'un élément de liaison et que les deux autres côtés périphériques seront munis d'un autre élément de liaison de forme complémentaire

14. Structure composite selon une ou plusieurs des revendications 1 à 13, **caractérisée par le fait qu'**une autre structure de sol composite (13) soit fixée sur la face supérieure de la couche de mortier (8) en vue de poser un revêtement de sol rigide (12), sachant que la pose du revêtement de sol rigide (12) est prévue sur la face supérieure de la couche de mortier (17) coulée sur la plaque porteuse (14).

15. Structure composite selon une ou plusieurs des revendications 1 à 14 **caractérisée par le fait qu'**un certain nombre d'éléments structurels (24) présentent sur leur face supérieure, un élément (25) en saillie, dont la hauteur correspond à l'épaisseur de la couche de mortier prévue.

16. Structure composite selon la revendication 15, **caractérisée en ce que** l'élément soit une partie bombée (25) de forme semi-sphérique.

17. Plaque porteuse destinée à réaliser une structure de sol composite selon la revendication 15, **caractérisée en ce que** la plaque porteuse (22) soit essentiellement constituée d'un élément de base plane sur lequel sont disposés des d'éléments structurels (23, 24) en saillie et de hauteur identique, sachant que les éléments structurels (23, 24) sont espacés les uns des autres et sont, par rapport à l'élément de base plane (22), disposés de manière à former un motif régulier et sont moulés sur l'élément de base (22), et que certains de ces éléments structurels (23, 24) présentent sur leur face supérieure un élément (25) en saillie.

18. Plaque porteuse selon la revendication 17 **caractérisée en ce que** l'élément en saillie sur certains éléments structurels (24) ait une forme bombée (25) et semi-sphérique.
